# EUROPÄISCHE PATENTSCHRIFT

(11) **EP 3 727 808 B1**
(45) Veröffentlichungstag und Bekanntmachung des Hinweises auf die Patenterteilung: **10.07.2024**
(21) Anmeldenummer: 18803633.9
(22) Anmeldetag: 13.11.2018
(51) Int. Cl.: B08B 7/00, B23K 26/40, B29C 65/56, B29C 71/04, B23K 26/402, B29C 35/08

(54) **VERFAHREN ZUM HERSTELLEN EINES KUNSTSTOFFBAUTEILS, SOWIE KUNSTSTOFFBAUTEIL**
METHOD FOR PRODUCING A PLASTIC COMPONENT, AND PLASTIC COMPONENT
PROCÉDÉ SERVANT À FABRIQUER UN COMPOSANT EN MATIÈRE PLASTIQUE, AINSI QUE COMPOSANT EN MATIÈRE PLASTIQUE

(30) Priorität: 20.12.2017 DE 102017223376; 04.06.2018 DE 102018208715
(43) Veröffentlichungstag der Anmeldung: 28.10.2020
(73) Patentinhaber: Magna Exteriors GmbH, 63877 Sailauf (DE)
(72) Erfinder: MENZEL, Marcel, 57627 Hachenburg (DE)
(74) Vertreter: Rausch, Gabriele
(86) Internationale Anmeldenummer: PCT/EP2018/081056
(87) Internationale Veröffentlichungsnummer: WO 2019/120758

(56) Entgegenhaltungen:
- EP-A2- 0 233 755
- DE-A1- 102009 012 858
- DE-A1- 102012 204 715

## Beschreibung

Die Erfindung geht aus von einem Verfahren zum Herstellen von Kunststoffbauteilen für ein Fahrzeug, wobei die Kunststoffbauteile in einem Lackierschritt mindesten teilweise lackiert werden und anschließend auf den nicht lackierten Flächen mit weiteren Bauteilen verbunden werden.

Die Erfindung erstreckt sich auf ein Kunststoffbauteil, das nach dem Verfahren hergestellt wird.

### Stand der Technik

Im Automobilbau werden seit längerer Zeit großformatige Kunststoff Bauteile bzw. Kunststoffbaugruppen verwendet. Für die Karosserie werden dabei Front-oder Heckmodule aus Kunststoff hergestellt, sowie Türen oder Heck klappen oder auch Verkleidungsteile für Schweller oder Fahrzeugsäulen.

Je nach Aufgabenstellung der großformatigen Kunststoffbauteile oder Kunststoffbaugruppen werden die Kunststoffbauteile mit weiteren Bauteilen zur Verstärkung oder zur Verkleidung oder zur Aufnahme von funktionalen Bauteilen verbunden.

Aus der EP 2384917 B1 ist eine solche Fahrzeugkarosseriegruppe bekannt, bei der Bereiche für die Befestigung vorgesehen sind, und wobei das Bauteil aus mehreren Einzel Strukturen zusammengesetzt ist.

Wenn die Kunststoffbauteile für die Karosserie des Fahrzeugs eingesetzt werden, werden sie im Allgemeinen in der Wagenfarbe lackiert. Die Lackierung erfolgt direkt nach der Herstellung des Bauteils aus Kunststoffspritzguss. Beim Lackieren der oftmals großformatigen Bauteile werden Lackierstraßen eingesetzt, in denen Roboterarme die Kunststoffbauteil mit oder ohne Rahmen halten und einem Lackiernebel aussetzen.

Dabei lässt es sich nicht vermeiden, dass nicht nur die Sichtflächen, die eigentlich lackiert werden sollen, mit Lack versehen werden, sondern dass auch Rückseiten oder verdeckte Flächen durch den sogenannten "Overspray" verunreinigt werden. Dabei handelt es sich um den Niederschlag des Lackiernebels auf dem gesamten Bauteil.

Da die Kunststoffbauteile nach dem Lackieren weiter verbaut und verarbeitet werden müssen, ist diese Verunreinigung durch das Lackieren schädlich. Gerade bei der Verarbeitung der Kunststoffbauteile mithilfe von Fügeverfahren wie Verschweißen oder Verklebungen sind die Lackiererreste für ein sicheres verarbeiten störend. Um Bereiche auf den Kunstbauteilen frei von Verunreinigungen nach dem lackieren zu halten, werden in der Produktion Klebestreifen, die sog. Maskierhilfsmittel, auf die Bereiche geklebt, die letztendlich für die weitere Verarbeitung des Kunststoffbauteils benötigt werden.

Dieser Maskierungsprozess muss meist manuell durchgeführt werden, auch das Entfernen der Klebestreifen nach dem Lackieren erfolgt manuell.

Zur Bearbeitung von Bauteilen belegt der Laser als Bearbeitungsgerät in vielen Bereichen der Industrie seit langem einen festen Platz. Es wurde beispielsweise im Bereich der Oberflächenbearbeitung auf Faserverbundwerkstoffen in den letzten 10 Jahren industriell großflächig nutzbar gemacht.

Die Laserbearbeitung weist ganz allgemein als besondere Vorteile auf, dass sie trocken und ohne Einsatz von chemischen Substanzen durchgeführt werden kann. Außerdem betrifft es im Allgemeinen ein sauberes, staubfreies Verfahren zur Bearbeitung, bei der zudem keine Materialschädigung stattfindet. Die Laserbearbeitung weist geringe Betriebskosten auf und ist damit im Ergebnis mit einer hohen Wirtschaftlichkeit verbunden.

Aus der EP 0 233 755 A1 ist ein Verfahren bekannt, mit dem Formtrennmittel von Kunststoffbauteilen mit Laserlicht entfernt wird. Ziel ist es, die Haftung von Farbe zu verbessern.

Die DE 10 2012 204 715 A1 beschreibt ein Verfahren für ein lackiertes Kunststoffbauteil, wobei das Kunststoffbauteil zunächst lackiert wird und mit einem Laser an der Bauteilinnenseite abgetragen wird.

Aus der DE 102009012858 A1 ist eine CO2-Laserbearbeitungen bekannt, bei der durch eine Anbindung eines Roboters an lineare Achsen der Einsatzradius einer Bearbeitungsvorrichtung mit Hilfe des Roboters erhöht wird. Die Führung des Laserstrahls erfolgt über Spiegel im Arbeitskopf. Auf dieser Plattform ist eine Lichtquelle, insbesondere eine Laserlichtquelle angeordnet und eine Roboter-Einheit ist mit der Plattform verbunden. Die Roboter-Einheit weist am räumlich beweglichen Ende eine Strahlverwertereinheit auf. Außerdem ist ein Strahlführungssystem zum Führen des Lichtes von der Lichtquelle bis zur Strahlverwertereinheit, insbesondere Arbeitskopf. Das Strahlführungssystem enthält mindestens einen mit der Plattform fest oder beweglich verbundenen Lichtstrahlsender und mindestens einen mit der Strahlverwertereinheit fest oder beweglich verbundenen Strahlempfänger. Außerdem sind der Strahlsender und der Strahlempfänger zueinander in einem veränderbaren Abstand angeordnet.

Mit einer solchen Anordnung werden Oberflächenbehandlungen ausgeführt. Ausgehend von diesem Stand der Technik ist es die Aufgabe der Erfindung ein Verfahren zur Herstellung von Kunststoffteilen, die lackiert werden vorzustellen, wobei auf einfache Art und Weise Prozessschritte miteinander integriert werden. Weiterhin ist es Aufgabe der Erfindung ein Kunststoffbauteil herzustellen, das besonders einfach und kostengünstig für die Weiterverarbeitung vorbereitet ist.

Die Aufgabe wird gelöst mit einem Verfahren zum Herstellen von Kunststoffbauteilen für ein Fahrzeug nach Anspruch 1.

Durch die Verwendung von Lasern zum Abtragen der Verunreinigung auf den Kunststoffbauteilen erspart man sich das Verkleben und Entfernen von Klebestreifen und den Einsatz von menschlicher Arbeitskraft.

Dabei ist vorgesehen, dass mindestens die Vorderseite des Kunststoffbauteils lackiert wird und auf der Rückseite Verunreinigungen durch Overspray oder gezielte Bereiche auf der Vorderseite mit Laserlicht entfernt werden.

Erfindungsgemäß erfolgt nach dem Lackierschritt ein Bearbeitungsschritt, in dem Stanzen und/oder Bohren mit einer Laserablation kombiniert ist.

Durch die Integration der Laserablation in den Bearbeitungsschritt was auch bedeutet, dass eine Maschinenstation für diesen Bearbeitungsschritt verwendet wird, können die Kunststoffbauteile sehr effizient bearbeitet werden. Dabei ist es auch denkbar, dass die Bearbeitungsschritte des Bohrens ebenfalls mit einem Laser ausgeführt werden, wobei derselbe Laserkopf für das Bohren verwendet werden kann, wie für die Laserablation des Oversprays. Allerdings ist auch der Einsatz von zwei unterschiedlichen Laserköpfen, jeweils ihre Aufgabe optimiert, denkbar.

Erfindungsgemäß wird für den Bearbeitungsschritt das Kunststoffbauteil hochkant gehalten.

Dabei ist der Vorteil, dass Produktionsfläche eingespart werden kann, wenn die großformatigen Kunststoffbauteile nicht horizontal bearbeitet werden, sondern in einer vertikalen Anordnung.

Es ist dabei von Vorteil, dass nach dem Bearbeitungsschritt das Kunststoffbauteil in einem weiteren Kombinationsschritt mit weiteren Bauteilen aus Kunststoff und/oder aus Metall und /oder aus Kompositmaterial in den Bereichen zur Verbindung verbunden wird.

Vorteilhafterweise erstrecken sich die Bereiche zur Verbindung kontinuierlich entlang der Kunststoffbauteilkontur.

Die Aufgabe wird weiterhin gelöst mit Kunststoffbauteile hergestellt nach dem Verfahren, wobei die Kunststoffbauteile Heckklappen, oder Frontmodule oder Heckmodule oder Schwellverkleidungen eines Fahrzeugs sind.

### Beschreibung der Erfindung

Die Erfindung wird in der nachfolgenden Ausführung erläutert und mit Figuren dargestellt.
- Figur 1: zeigt ein Beispiel einer Fahrzeugheckklappe,
- Figur 2: zeigt schematisch Herstellungsschritte.

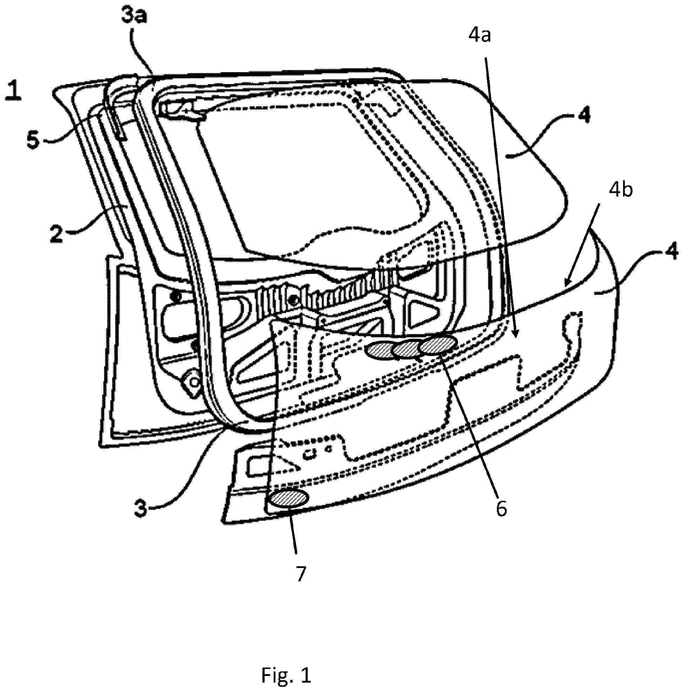

In Figur 1 sind die Hauptbestandteile einer Heckklappe 1 dargestellt, die als ein Beispiel für großflächige Kunststoffbauteile dient. Als Basis der Heckklappe dient ein Trägerteil 2, das beispielsweise aus faserverstärkten Kunststoffen hergestellt ist. Der versteifende Rahmen 3 ist eine geschlossene Form oder auch eine nichtgeschlossene, beliebige Form aus einem Polyurethan-Material oder andere Verbundmaterialien. Die Verkleidungsteile 4 werden mit dem Trägerteil 2 verbunden. Zur Versteifung der Heckklappe sind Versteifungselemente 5 vorgesehen, die in diesem Ausführungsbeispiel aus Metall hergestellt sind und im Bereich 3a angeordnet sind. Sie werden getrennt mit dem Trägerteil 2 verbunden.

Die Verkleidungsteile 4 sind dabei auf ihren sichtbaren Flächen 4a lackiert. Die Lackierung kann dabei natürlich auch Bereiche des Rands der Verkleidungsteile 4 umfassen, die nach dem Zusammenbau sichtbar bleiben.

Auf der Innenseite 4b der Verkleidungsteile 4 sind Bereiche 6 vorhanden, die für die Verbindung des Verkleidungsteils 4 mit dem Trägerteil 2 von Verunreinigungen befreit werden müssen.

Weiterhin kann das Verkleidungsteil 4 auch Bereiche 7 aufweisen, die für die Aufnahme von Sensoren vorbereitet werden müssen, und ebenfalls vor Verunreinigungen befreit werden.

Die Verkleidungsteile 4 sind beispielhaft für die Kunststoffbauteile, die am Fahrzeug mit außen sichtbaren Lackflächen montiert sind.

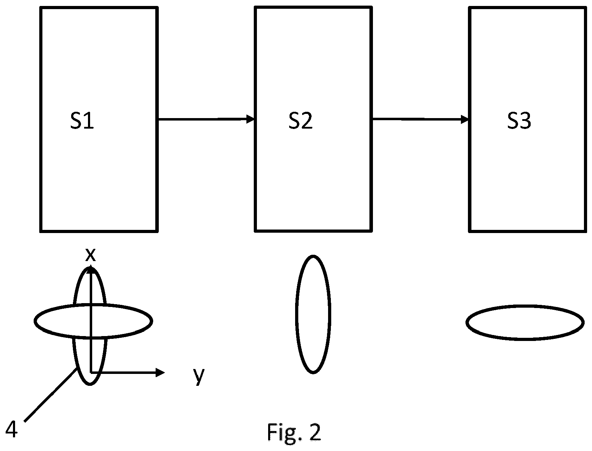

In Figur 2 ist schematisch das Bearbeitungsverfahren in den drei Hauptschritten dargestellt. Das Bearbeitungsverfahren soll dabei nicht allein auf diese drei Hauptschritte limitiert sein. In einem ersten Bearbeitungsschritt dem Lackierschritt S1, bzw. in einer ersten Bearbeitungsstation, werden die Kunststoffbauteile, z.B. die Verkleidungsteile 4, lackiert. Dabei werden die Kunststoffbauteile 4, wie ebenfalls sehr schematisch unterhalb der Verfahrensschritte dargestellt, in unterschiedlichen Orientierungen x, y, z bearbeitet. Besonders bei der Verwendung von Lackiererrobotern sowie von Roboterarmen, die die Bauteile mit oder ohne Rahmen führen, werden die Kunststoffbauteile 4 in unterschiedlichsten Orientierungen gehalten und so lackiert.

Die Bearbeitungsanlage 10 im Bearbeitungsschritt S2 übernimmt das lackierte Kunststoffbauteil 4 automatisch oder manuell und enthält mindestens eine Bearbeitungsstation 10, in der das Kunststoffbauteil 4 von Verunreinigungen auf der nicht lackierten Innenseite 4b befreit wird. Dabei wird ein CO2-Laser eingesetzt, um Bereiche 6, die zur Verbindung des Kunststoffbauteils 4 mit weiteren Bauteilen benötigt werden, von der Verunreinigung zu befreien.

Weiterhin werden auch Bereiche 7, die zur Montage von Funktionsbauteilen wie beispielsweise Sensoren vorgesehen sind, von Verunreinigung befreit.

Im Bearbeitungsschritt S2 können auch weitere Bearbeitungen wie das Bohren von Löchern, sowie das Stanzen von Ausnehmungen vorgesehen sein. Dabei ist das Bohren von Löchern auch mit einem Laser möglich, wobei ein einziger Laser für das Abtragen der Verunreinigungen und für das Bohren der Löcher verwendet werden kann. Alternativ dazu werden zwei unterschiedliche Laser verwendet.

Die im Bearbeitungsschritt S2 eingesetzte Bearbeitungsanlage bearbeitet das Kunststoffbauteil 4 vorzugsweise in vertikaler Richtung, d.h. wie in der Figur 2 angedeutet in einer Ausrichtung entlang der x-Achse.

Durch diese Hochkantanordnung wird Bauraum in der Produktion eingespart. Nahe der Bearbeitungsanlage 10 des Bearbeitungsschrittes S2 kann dann zudem ein Lagerturm 15 für unterschiedliche Stanzwerkzeuge und/oder Bohrwerkzeuge vorgesehen sein, mit der die Station automatisch bestückt werden kann.

Dadurch ist es möglich im Bearbeitungsschritt S2 an dieser Station ganz unterschiedliche Kunststoffbauteile 4 zu bearbeiten, da ein Austausch der Werkzeuge einfach erfolgen kann und der CO2-Laser leicht auf unterschiedliche Reinigungsaufgaben abgestimmt werden kann.

Im nächsten Verarbeitungsschritt S3 wird das vorbereitete Kunststoffbauteil 4 mit weiteren Komponenten und weiteren Bauteilen verbunden.

### Bezugszeichen

1 Bauteil
2 Trägerteil
3 Rahmen
3a Bereich des Rahmens
4 Verkleidungsteil
4a sichtbaren Flächen
4b Innenseite
5 Verstärkungsteil
6 Bereiche für Verbindung
7 Bereiche für Funktionen
S1, S2, S3 Bearbeitungsschritte
10 Bearbeitungsanlage
15 Lagerturm

## Patentansprüche

1. Verfahren zum Herstellen von Kunststoffbauteilen (4) für ein Fahrzeug, wobei die Kunststoffbauteile (4) in einem Lackierschritt (S1) mindesten teilweise lackiert werden und anschließend auf den nicht lackierten Flächen mit weiteren Bauteilen verbunden werden, wobei ein Bereich (6), der zur Verbindung mit den weiteren Bauteilen dient, durch ein Abtragungsverfahren mit Laserlicht von Verunreinigungen befreit wird und, wobei nach dem Lackierschritt (S1) ein Bearbeitungsschritt (S2) erfolgt, in dem Stanzen und/oder Bohren mit einer Laserablation kombiniert ist, wobei für den Bearbeitungsschritt (S2) das Kunststoffbauteil (4) hochkant gehalten wird.

2. Verfahren nach Anspruch 1, **dadurch gekennzeichnet, dass** mindestens die Vorderseite (4a) des Kunststoffbauteils (4) lackiert wird und auf der Innenseite (4b) Verunreinigungen durch Overspray mit Laserlicht entfernt werden.

3. Verfahren nach einem der vorhergehenden Ansprüche, **dadurch gekennzeichnet, dass** nach dem Bearbeitungsschritt (S2) das Kunststoffbauteil (4) in einem weiteren Kombinationsschritt (S3) mit weiteren Bauteilen aus Kunststoff und/oder aus Metall und /oder aus Verbundmaterial in den Bereichen (6) zur Verbindung verbunden wird.

4. Verfahren nach einem der vorhergehenden Ansprüche, **dadurch gekennzeichnet, dass** die Bereiche (6) zur Verbindung sich kontinuierlich entlang der Kunststoffbauteilkontur erstrecken.

5. Verfahren nach einem der vorhergehenden Ansprüche, **dadurch gekennzeichnet, dass** Bereiche (7) für Funktionen von Verunreinigungen gereinigt werden.

6. Kunststoffbauteile hergestellt nach dem Verfahren nach den Ansprüchen 1 bis 5, wobei die Kunststoffbauteile Heckklappen, oder Frontmodule oder Heckmodule oder Schwellverkleidungen eines Fahrzeugs sind.

## Claims

1. Method for producing plastic components (4) for a vehicle, wherein the plastic components (4) are at least partially painted in a painting step (S1) and then connected to further components on the non-painted surfaces, wherein a region (6), which is used for connection to the further components, is freed of contaminations by a material removal method using laser light, and wherein the painting step (S1) is followed by a machining step (S2) in which punching and/or boring is combined with laser ablation, wherein the plastic component (4) is kept upright for the machining step (S2).

2. Method according to Claim 1, **characterized in that** at least the front side (4a) of the plastic component (4) is painted and contaminations due to overspray on the inner side (4b) are removed with laser light.

3. Method according to either of the preceding claims, **characterized in that**, after the machining step (S2), the plastic component (4) is connected in a further combination step (S3) to further components made of plastic and/or metal and/or composite material in the regions (6) for connection.

4. Method according to one of the preceding claims, **characterized in that** the regions (6) for connection extend continuously along the contour of the plastic component.

5. Method according to one of the preceding claims, **characterized in that** regions (7) for functions are cleansed of contaminations.

6. Plastic components produced by the method according to Claims 1 to 5, wherein the plastic components are tailgates, or front modules or rear modules or sill trims of a vehicle.

## Revendications

1. Procédé de fabrication de composants (4) en matière synthétique destinés à un véhicule, les composants (4) en matière synthétique étant peints au moins partiellement lors d'une étape de peinture (S1) puis reliés à d'autres composants sur les surfaces non peintes, une zone (6) qui sert à relier les autres composants étant débarrassée de toute impureté par un procédé d'ablation avec une lumière laser, une étape de traitement (S2) dans laquelle l'emboutissage et/ou le perçage est combiné avec une ablation laser, étant réalisée après l'étape de peinture (S1), le composant (4) en matière synthétique étant maintenu verticalement pour l'étape de traitement (S2).

2. Procédé selon la revendication 1, **caractérisé en ce qu'**au moins le côté avant (4a) du composant (4) en matière synthétique est peint et les impuretés sur le côté intérieur (4b) sont éliminées par projection en excès de lumière laser.

3. Procédé selon l'une des revendications précédentes, **caractérisé en ce que**, après l'étape de traitement (S2), le composant (4) en matière synthétique est relié dans une autre étape de combinaison (S3) à d'autres composants en matière synthétique et/ou en métal et/ou en matière composite dans les zones de liaison (6).

4. Procédé selon l'une des revendications précédentes, **caractérisé en ce que** les zones de liaison (6) s'étendent de manière continue le long du contour du composant en matière synthétique.

5. Procédé selon l'une des revendications précédentes, **caractérisé en ce que** les zones (7) destinées aux fonctions sont nettoyées des impuretés.

6. Composants en matière synthétique fabriqués selon le procédé selon les revendications 1 à 5, les composants en matière synthétique étant des hayons, des modules avant, des modules arrière ou des garnitures de seuil d'un véhicule.
